(19) Europäisches Patentamt
European Patent Office
Office européen des brevets

(11) **EP 4 075 187 B1**

(12) **EUROPEAN PATENT SPECIFICATION**

(45) Date of publication and mention
of the grant of the patent:
**07.05.2025 Bulletin 2025/19**

(21) Application number: **20899927.6**

(22) Date of filing: **09.12.2020**

(51) International Patent Classification (IPC):
**G02F 1/1333** *(2006.01)*  **B32B 7/023** *(2019.01)*
**G02B 5/30** *(2006.01)*  **G02F 1/1335** *(2006.01)*
**G02F 1/13363** *(2006.01)*

(52) Cooperative Patent Classification (CPC):
**G02B 5/3083; B32B 27/08; B32B 27/302;
B32B 27/308; G02F 1/133331;** B32B 2250/246;
B32B 2250/40; B32B 2255/10; B32B 2255/26;
B32B 2307/308; B32B 2307/412; B32B 2307/42;
B32B 2457/202; B32B 2571/00; G02F 1/13363;
(Cont.)

(86) International application number:
**PCT/JP2020/045935**

(87) International publication number:
**WO 2021/117788 (17.06.2021 Gazette 2021/24)**

(54) **LIQUID CRYSTAL DISPLAY PROTECTIVE PLATE**

**SCHUTZPLATTE FÜR FLÜSSIGKRISTALLANZEIGE**

**PLAQUE DE PROTECTION D'ÉCRAN À CRISTAUX LIQUIDES**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2019 JP 2019223420**

(43) Date of publication of application:
**19.10.2022 Bulletin 2022/42**

(73) Proprietor: **Kuraray Co., Ltd.
Kurashiki-shi, Okayama 710-0801 (JP)**

(72) Inventors:
• **OZAWA, Yushi
Tainai-shi, Niigata 959-2691 (JP)**
• **YAMANO, Masaharu
Tainai-shi, Niigata 959-2691 (JP)**
• **TAGA, Sho
Tainai-shi, Niigata 959-2691 (JP)**

(74) Representative: **Müller-Boré & Partner
Patentanwälte PartG mbB
Friedenheimer Brücke 21
80639 München (DE)**

(56) References cited:
WO-A1-2006/068200     WO-A1-2018/199213
JP-A- 2008 050 550    JP-A- 2017 125 112
JP-A- 2017 125 185    JP-A- 2018 060 014
KR-A- 20100 104 519   US-A1- 2016 053 104

(52) Cooperative Patent Classification (CPC): (Cont.)
G02F 2201/50; G02F 2202/022

## Description

Technical Field

The present invention relates to a liquid crystal display protective plate.

Background Art

In liquid crystal displays and touch panel displays that combine such liquid crystal displays with touch panels, a protective plate may be provided on the front side thereof to prevent scratches on the surface. In the present description, this protective plate is called a "liquid crystal display protective plate".

The liquid crystal display protective plate includes a resin plate formed of at least one thermoplastic resin layer, and, if necessary, a cured coating film formed on at least one surface of the resin plate.

For example, Patent Literature 1 discloses a scratch-resistant resin plate suitable as a display window protective plate for portable-type information terminals, including a methacrylic resin plate and a cured coating film formed on at least one surface thereof (Claims 1, 2, and 7, paragraph [0010], etc.). Patent Literature 2 discloses a polycarbonate resin laminate for a liquid crystal display cover including a laminate plate in which a methacrylic resin layer is laminated on one surface of a polycarbonate resin layer and a cured coating film formed on the methacrylic resin layer of this laminate plate (Claim 1, paragraph [0008], etc.).

A liquid crystal display protective plate is disposed on the front side (the viewer side) of the liquid crystal display, and a viewer views the screen of the liquid crystal display through this protective plate. Here, since the liquid crystal display protective plate hardly changes the polarization property of emitted light from the liquid crystal display, when the screen is viewed through a polarizing filter such as polarized sunglasses, the screen may become darker depending on an angle between the polarization axis of the emitted light and the transmission axis of the polarizing filter, and hence the visibility of images may deteriorate (blackout phenomenon).

Therefore, a liquid crystal display protective plate that can suppress the deterioration of the visibility of images has been studied in the case where the screen of the liquid crystal display is viewed through the polarizing filter. For example, Patent Literature 3 discloses a liquid crystal display protective plate formed of a scratch-resistant resin plate including a cured coating film formed on at least one surface of the resin plate and having an in-plane retardation value (also referred to as a "Re value") of 85 to 300 nm (Claim 1).

Patent Literature 4 discloses a method for manufacturing an extruded resin plate suitable as a protective plate for a liquid crystal display or the like.

Furthermore, Patent Literature 5 discloses a resin material capable of producing a molded body.

Citation List

Patent Literature

Patent Literature 1: Japanese Unexamined Patent Application Publication No. 2004-299199
Patent Literature 2: Japanese Unexamined Patent Application Publication No. 2006-103169
Patent Literature 3: Japanese Unexamined Patent Application Publication No. 2010-085978
Patent Literature 4: WO 2018/199213 A1
Patent Literature 5: US 2016/053104 A1

Summary of Invention

Technical Problem

In Patent Literature 3, a resin plate is preferably a laminate plate in which a methacrylic resin layer is laminated on at least one surface of a polycarbonate resin layer (Claim 6). In this laminate plate, for example, the birefringence of the polycarbonate resin layer can be adjusted by adjusting molding conditions depending on the thickness of the resin plate, and a Re value of a liquid crystal display protective plate can be adjusted within a suitable range (paragraph [0036], etc.).

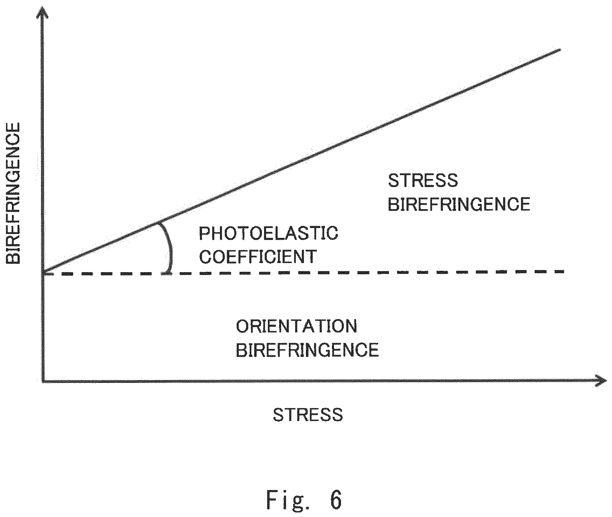

Fig. 6 shows an image diagram illustrating a relationship between stress and birefringence, and a relationship among orientation birefringence, stress birefringence, and photoelastic coefficient.

The polycarbonate resin used in Patent Literature 3 has a very large absolute value of the photoelastic coefficient of $90 \times 10^{-12}$/Pa, and thus the Re value changes with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, rainbow unevenness may be observed due to variation in the Re value.

Meanwhile, the methacrylic resin used in Patent Literature 1 has a small absolute value of the photoelastic coefficient of $3.2 \times 10^{-12}$/Pa, and thus the Re value does not easily change with stress. Therefore, in the case of using the methacrylic resin, it is possible to obtain an optically uniform liquid crystal display protective plate. However, since the methacrylic resin has a small absolute value of orientation birefringence of $4.0 \times 10^{-4}$, the Re value of the resulting liquid crystal display protective plate tends to be as small as 20 nm, although it depends on the thickness. Therefore, when the liquid crystal display protective plate on a liquid crystal screen is observed through a polarizing filter, blackout, in which the screen may become completely dark, may occur depending on an angle between the polarization axis of the emitted light and the transmission axis of the polarizing filter, resulting in deterioration of the visibility of images.

In the case where the Re value of the liquid crystal display protective plate is larger than the suitable range, the difference in light transmittance for each wavelength in the visible light range generally becomes large when viewed through a polarizing filter, and hence various colors may be seen, resulting in deterioration of the visibility (colored phenomenon).

The present invention has been devised in view of the circumstances described above, and an object thereof is to provide a liquid crystal display protective plate capable of suppressing deterioration of visibility such as rainbow unevenness, blackout, and coloring when the liquid crystal display protective plate on a liquid crystal screen is observed through a polarizing filter.

Solution to Problem

The present invention provides the liquid crystal display protective plate according to appended claims 1 to 7.

Advantageous Effects of the Invention as defined in the appended claims.

The present invention can provide a liquid crystal display protective plate capable of suppressing deterioration of visibility such as rainbow unevenness, blackout, and coloring when the liquid crystal display protective plate on a liquid crystal screen is observed through a polarizing filter.

Brief Description of the Drawings

[Fig. 1] Fig. 1 is a schematic cross-sectional view of the liquid crystal display protective plate of the first embodiment according to the present invention.
[Fig. 2] Fig. 2 is a schematic cross-sectional view of the liquid crystal display protective plate of the second embodiment according to the present invention.
[Fig. 3] Fig. 3 is a schematic view of the apparatus for production of the extruded plate of one embodiment according to the present invention.
[Fig. 4] Fig. 4 is a schematic cross-sectional view of the liquid crystal display protective plate for comparative examples.
[Fig. 5] Fig. 5 is a schematic cross-sectional view of the liquid crystal display protective plate for comparative examples.
[Fig. 6] Fig. 6 is an image diagram illustrating a relationship between stress and birefringence, and a relationship among orientation birefringence, stress birefringence, and photoelastic coefficient.

Description of Embodiments

In general, the term "film", "sheet", or "plate" is used for a thin film formed product depending on its thickness, but there is no clear distinction. The term "resin plate" as used herein includes "resin film" and "resin sheet".
In the present description, the glass transition temperature of common materials is represented as "Tg".

[Liquid crystal display protective plate]

The present invention relates to a liquid crystal display protective plate. The liquid crystal display protective plate can be suitably used for the protection of liquid crystal displays and touch panel displays that combine such liquid crystal displays with touch panels.

The liquid crystal display protective plate of the present invention includes a resin plate in which a substrate layer is laminated on both sides of a phase difference adjusting layer and preferably includes a cured coating film. The resin plate is preferably an extruded plate.

The phase difference adjusting layer includes a transparent thermoplastic resin (A) having specific optical properties, and the substrate layer includes a transparent thermoplastic resin (B) having specific optical properties. $Tg_A <$ $Tg_B$, in which $Tg_A$ (°C) represents a glass transition temperature of the phase difference adjusting layer, and $Tg_B$ (°C) represents a glass transition temperature of the substrate layer. The resin plate has an in-plane retardation value (also referred to as a "Re value") of 50 to 330 nm.

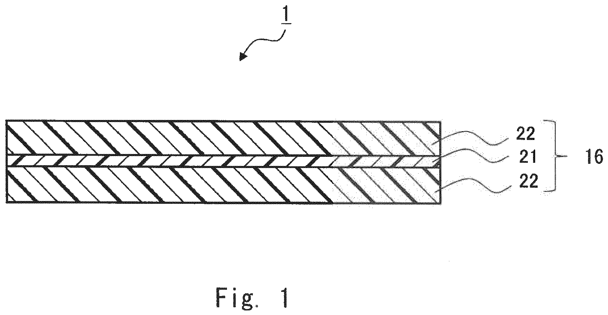

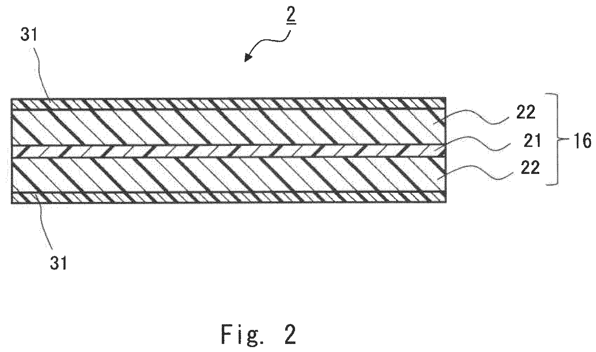

Fig. 1 and Fig. 2 are schematic cross-sectional views of the liquid crystal display protective plates of the first and the second embodiments according to the present invention. In the figures, reference numerals 1 and 2 each denote a liquid crystal display protective plate, reference numeral 16 denotes a resin plate, reference numeral 21 denotes a phase difference adjusting layer, reference numeral 22 denotes a substrate layer, and reference numeral 31 denotes a cured coating film.

The liquid crystal display protective plate 1 of the first embodiment is composed of the resin plate 16 having a three-layer structure in which the substrate layer 22 is laminated on both sides of the phase difference adjusting layer 21.

The liquid crystal display protective plate 2 of the second embodiment includes a cured coating film 31 formed on at least one surface of the resin plate 16 having a three-layer structure in which the substrate layer 22 is laminated on both sides of the phase difference adjusting layer 21. In an example shown in Fig. 2, the cured coating film 31 is formed on both sides of the resin plate 16.

The configuration of the liquid crystal display protective plates is not limited to examples illustrated and can be appropriately designed and changed within a range not deviated from the scope of the present invention as defined in the appended claims.

In the present invention, the phase difference adjusting layer includes a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen after the uniaxial stretching.

The "retardation" is the phase difference between light in the direction of the molecular backbone and light in the direction perpendicular to the direction of the molecular backbone. In general, polymers can have any shape by heating and melting, but it is known that retardation occurs due to stress generated in the process of heating and cooling, the orientation of molecules, and the like. Note that in the present description, the "retardation" refers to the in-plane retardation, unless otherwise noted.

In general, the Re value of the resin plate is expressed by the following formula (i).

$$[\text{Re value of the resin plate}] = [\text{birefringence } (\Delta N)] \times [\text{thickness } (d)] \qquad (i)$$

The birefringence ($\Delta N$) is expressed by the following formula (ii).

$$[\text{Birefringence}] = [\text{stress birefringence}] + [\text{orientation birefringence}] \qquad (ii)$$

The stress birefringence and the orientation birefringence are expressed by the following formulas (iii) and (iv), respectively.

$$[\text{Stress birefringence}] = [\text{photoelastic coefficient } (C)] \times [\text{stress}] \qquad (iii)$$

$$[\text{Orientation birefringence}] = [\text{intrinsic birefringence}] \times [\text{degree of orientation}]$$
$$(iv)$$

In formula (iv), the degree of orientation is a value in the range of 0 to 1.0.

Fig. 6 shows an image diagram illustrating a relationship between stress and birefringence, and a relationship among orientation birefringence, stress birefringence, and photoelastic coefficient.

In the present invention, optical properties of the transparent thermoplastic resin (A) and the transparent thermoplastic resin (B) are specified with the photoelastic coefficient and the orientation birefringence, which are schematically illustrated in Fig. 6.

The liquid crystal display protective plate of the present invention includes a phase difference adjusting layer including the transparent thermoplastic resin (A) having the above specific optical properties, thus making it possible to suppress the deterioration of visibility such as rainbow unevenness and blackout when the liquid crystal display protective plate on a liquid crystal screen is observed through a polarizing filter.

In the present description, the "Re value of the resin plate" is an average Re value of about 110,000 birefringent pixels within a measurement range of 17 cm in width and 22 cm in length, unless otherwise noted. The "standard deviation of the Re value of the resin plate" is a standard deviation of the Re value of about 110,000 birefringent pixels within a measurement range of 17 cm in width and 22 cm in length, unless otherwise noted.

The resin plate has a Re value of 50 to 330 nm, preferably 70 to 250 nm, more preferably 80 to 200 nm, and particularly preferably 90 to 150 nm. If the Re value is less than the lower limit, blackout may occur when the liquid crystal display protective plate on a liquid crystal screen is observed through a polarizing filter, regardless of the relationship between the polarization axis of the emitted light and the transmission axis of the polarizing filter. If the Re value is more than the upper limit, the difference in light transmittance for each wavelength in the visible light range becomes large when viewed through a polarizing filter, and hence various colors may be seen, resulting in deterioration of the visibility (colored phenomenon).

The smaller the standard deviation of the Re value of the resin plate, the less variation in the Re value, which is preferred. The standard deviation of the Re value is preferably 15 nm or less, more preferably 10 nm or less, still more preferably 7 nm or less, particularly preferably 5 nm or less, and most preferably 4 nm or less. If the standard deviation of the Re value is equal to or less than the upper limit, rainbow unevenness due to variation in the Re value may be suppressed when the liquid crystal display protective plate on a liquid crystal screen is observed through a polarizing filter, and hence the visibility improves.

The average and standard deviation of the Re value of the resin plate can be measured, for example, by using the retardation measuring instrument "WPA-100-L", manufactured by Photonic Lattice, Inc., according to the method described in [Examples] below.

The overall thickness (d) of the resin plate is not particularly limited and is preferably 0.2 to 5.0 mm, more preferably 0.5 to 4.0 mm, and particularly preferably 1.0 to 3.5 mm. Excessively small overall thickness may result in insufficient rigidity of the liquid crystal display protective plate, whereas excessively large overall thickness may hinder the weight reduction of liquid crystal displays and touch panel displays including the same.

(Phase difference adjusting layer)

The resin plate included in the liquid crystal display protective plate of the present invention includes a phase difference adjusting layer. The phase difference adjusting layer is a layer that mainly determines the Re value of the liquid crystal display protective plate and includes a transparent thermoplastic resin (A) having specific optical properties.

<Transparent thermoplastic resin (A)>

The transparent thermoplastic resin (A) has an absolute value of photoelastic coefficient ($C_A$) of $10.0 \times 10^{-12}$/Pa or less, preferably $8.0 \times 10^{-12}$/Pa or less, more preferably $6.0 \times 10^{-12}$/Pa or less, particularly preferably $5.0 \times 10^{-12}$/Pa or less, and most preferably $4.0 \times 10^{-12}$/Pa or less. If the absolute value of the photoelastic coefficient ($C_A$) is equal to or less than the upper limit, stress birefringence due to residual stress that occurs during the forming process such as extrusion is small (see Fig. 6), and thus the standard deviation of the Re value of the liquid crystal display protective plate can be reduced. As a result, rainbow unevenness due to variation in the Re value may be suppressed when the liquid crystal display protective plate on a liquid crystal screen is observed through a polarizing filter, and hence the visibility improves.

The transparent thermoplastic resin (A) has an absolute value of orientation birefringence ($\Delta n_A$) of $10.0 \times 10^{-4}$ to $100.0 \times 10^{-4}$, preferably $20.0 \times 10^{-4}$ to $90.0 \times 10^{-4}$, more preferably $30.0 \times 10^{-4}$ to $70.0 \times 10^{-4}$, and particularly preferably $35.0 \times 10^{-4}$ to $60.0 \times 10^{-4}$. If the absolute value of orientation birefringence ($\Delta n_A$) of the transparent thermoplastic resin (A) is within the above range, the Re value of the liquid crystal display protective plate can be controlled within an appropriate range.

The orientation birefringence depends on the degree of polymer orientation and is therefore affected by production conditions such as forming conditions and stretching conditions. In the present description, the "orientation birefringence" is measured according to the method described in [Examples] below, unless otherwise noted.

The transparent thermoplastic resin (A) is not particularly limited as long as it is a transparent thermoplastic resin that satisfies ranges of photoelastic coefficient ($C_A$) and orientation birefringence ($\Delta n_A$) specified in the present invention.

In one aspect, the transparent thermoplastic resin (A) can contain one or two or more aromatic vinyl monomer units. The aromatic vinyl monomers are not particularly limited. Examples thereof include styrene (St); nucleus alkyl-substituted styrene such as 2-methylstyrene, 3-methylstyrene, 4-methylstyrene, 4-ethylstyrene, and 4-tert-butylstyrene; and $\alpha$-alkyl-substituted styrene such as $\alpha$-methylstyrene and 4-methyl-$\alpha$-methylstyrene. Among them, styrene (St) is preferred from the viewpoint of availability.

V [mass%] represents a content of the aromatic vinyl monomer unit in the transparent thermoplastic resin (A), and $T_A$ [mm] represents a thickness of the phase difference adjusting layer. The product of them ($V \times T_A$) preferably satisfies the following formula (1).

$$6.0 \le V \times T_A \le 30.0 \qquad (1)$$

The transparent thermoplastic resin (A) has a small absolute value of photoelastic coefficient ($C_A$) and almost zero stress birefringence. In the case where the transparent thermoplastic resin (A) contains aromatic vinyl monomer units such as styrene (St) units, the orientation birefringence ($\Delta n_A$) tends to depend on the content of the aromatic vinyl monomer units V [ mass%] in the transparent thermoplastic resin (A). Therefore, $V \times T_A$ is strongly correlated with the Re value of the liquid crystal display protective plate. In the case where the $V \times T_A$ satisfies the above formula (1), the Re value of the liquid crystal display protective plate can be controlled within an appropriate range.

The transparent thermoplastic resin (A) may be a copolymer having, in addition to aromatic vinyl monomer units, methacrylic acid ester units such as methyl methacrylate (MMA) units; acid anhydride units such as maleic anhydride units; and other monomer units such as acrylonitrile units.

Specific examples of the transparent thermoplastic resin (A) containing the aromatic vinyl monomer units include a methacrylic acid ester-styrene copolymer (MS resin); a styrene-maleic anhydride copolymer (SMA resin); a styrene-methacrylic acid ester-maleic anhydride copolymer (SMM resin); and an acrylonitrile-styrene copolymer (AS resin). These can be used alone or in combination of two or more.

The content of the aromatic vinyl monomer units V [mass%] in the transparent thermoplastic resin (A) is not particularly limited and is preferably 10 to 90 mass% and more preferably 20 to 80 mass%.

The transparent thermoplastic resin (A) may be a resin that does not contain the aromatic vinyl monomer units as long as it satisfies the ranges of photoelastic coefficient ($C_A$) and orientation birefringence ($\Delta n_A$) specified in the present invention. Examples of the transparent thermoplastic resin (A) that does not contain the aromatic vinyl monomer units include a modified methacrylic resin containing methacrylic acid ester units such as methyl methacrylate units and at least one unit selected from glutarimide units, N-substituted or unsubstituted maleimide units, and lactone ring units. These can be used alone or in combination of two or more.

The transparent thermoplastic resin (A) may be a mixture of a resin containing aromatic vinyl monomer units that satisfy ranges of photoelastic coefficient ($C_A$) and orientation birefringence ($\Delta n_A$) specified in the present invention and a resin (modified methacrylic resin) that does not contain aromatic vinyl monomer units that satisfy ranges of photoelastic coefficient ($C_A$) and orientation birefringence ($\Delta n_A$) specified in the present invention.

In the present invention, common methacrylic resins (non-modified methacrylic resins) and polycarbonate resins other than the above are not included in the transparent thermoplastic resin (A) because the photoelastic coefficient and/or orientation birefringence are outside the specified ranges of the present invention.

The polycarbonate resin has a very large absolute value of the photoelastic coefficient of $90 \times 10^{-12}$/Pa, and thus the Re value changes with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, rainbow unevenness may be observed due to variation in the Re value.

The methacrylic resin has a small absolute value of the photoelastic coefficient of $3.2 \times 10^{-12}$/Pa, and thus the Re value does not easily change with stress. Therefore, in the case of using the methacrylic resin, it is possible to obtain an optically uniform liquid crystal display protective plate. However, since the methacrylic resin has a small absolute value of orientation birefringence of $4.0 \times 10^{-4}$, the Re value of the resulting liquid crystal display protective plate tends to be as small as 20 nm, although it depends on the thickness. Therefore, when the liquid crystal display protective plate on a liquid crystal screen is observed through a polarizing filter, blackout, in which the screen may become completely dark, may occur depending on an angle between the polarization axis of the emitted light and the transmission axis of the polarizing filter, resulting in deterioration of the visibility of images.

The thickness of the phase difference adjusting layer ($T_A$) is not particularly limited and is preferably designed to satisfy the above formula (1) in the case where the transparent thermoplastic resin (A) contains the aromatic vinyl monomer units. The $T_A$ is preferably 0.05 to 3.0 mm, more preferably 0.1 to 1.0 mm, particularly preferably 0.1 to 0.5 mm, and most preferably 0.1 to 0.3 mm.

The phase difference adjusting layer can contain one or more other polymers whose photoelastic coefficient and/or orientation birefringence are not specified as the transparent thermoplastic resin (A), if in small amounts. The types of such other polymers are not particularly limited. Examples thereof include other thermoplastic resins such as common non-modified methacrylic resins, polycarbonate resins, polyolefins, e.g., polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins.

The common non-modified methacrylic resins are, for example, resins composed of one or more methacrylic acid ester units.

The content of the transparent thermoplastic resin (A) in the phase difference adjusting layer is preferably larger and is preferably 90 mass% or more, more preferably 95 mass% or more, and particularly preferably 98 mass% or more. The content of the other polymers in the phase difference adjusting layer is preferably 10 mass% or less, more preferably 5 mass% or less, and particularly preferably 2 mass% or less.

The phase difference adjusting layer can contain various additives, if necessary. Examples of the additives include colorants, antioxidants, thermal degradation preventing agents, ultraviolet absorbers, light stabilizers, lubricants, mold release agents, polymer processing aids, antistatic agents, flame retardants, light diffusing agents, matting agents, rubber components (impact resistant modifiers) such as core-shell particles and block copolymers, and phosphors. The content of the additives can be appropriately set, as long as the effects of the present invention are not impaired. For example, the content of antioxidants is preferably 0.01 to 1 parts by mass, the content of ultraviolet absorbers is preferably 0.01 to 3 parts by mass, the content of light stabilizers is preferably 0.01 to 3 parts by mass, and the content of lubricants is preferably 0.01 to 3 parts by mass, with respect to 100 parts by mass of the constituent resin of the phase difference adjusting layer.

In the case of adding such other polymers and/or additives to the phase difference adjusting layer, the timing of addition may be at the time of polymerization of the transparent thermoplastic resin (A) or after the polymerization.

The phase difference adjusting layer may be a resin layer formed of a resin composition containing the transparent thermoplastic resin (A) and a known rubber component (impact resistance modifier). Examples of the rubber component include a multilayered polymer particle having a core-shell structure, a rubber-like polymer with a salami structure, and a block polymer. The rubber component can contain diene monomer units and alkyl acrylate monomer units. From the viewpoint of transparency of the phase difference adjusting layer, a smaller difference between and refractive index of the rubber component and a reflective index of the main component, the transparent thermoplastic resin (A) is preferred.

The glass transition temperature of the phase difference adjusting layer ($Tg_A$) is not particularly limited as long as it satisfies $Tg_A < Tg_B$ and is preferably 80 to 160°C, more preferably 90 to 150°C, particularly preferably 95 to 140°C, and most preferably 100 to 130°C.

Note that the "glass transition temperature of the phase difference adjusting layer ($Tg_A$)" is a glass transition temperature of all constituent materials of the phase difference adjusting layer, which is composed of one or more transparent thermoplastic resin (A) and, if necessary, one or more optional components.

(Substrate layer)

The resin plate included in the liquid crystal display protective plate of the present invention includes a substrate layer that is laminated on both sides of the phase difference adjusting layer above and has a higher glass transition temperature (Tg) than the phase difference adjusting layer.

The substrate layer is laminated on both sides of the phase difference adjusting layer for the purpose of increasing the overall thickness (d) of the resin plate, improving the rigidity of the resin plate, improving the heat resistance of the surface of the resin plate, and the like. The substrate layer is preferably a resin layer that does not affect the Re value of the liquid crystal display protective plate and is preferably a resin layer that contains a transparent thermoplastic resin (B) with a sufficiently small photoelastic coefficient and orientation birefringence.

The composition and thickness of the substrate layer laminated on both sides of the phase difference adjusting layer may be the same or non-identical, as long as each substrate layer is a resin layer containing the transparent thermoplastic resin (B) having the optical properties above.

<Transparent thermoplastic resin (B)>

The absolute value of the photoelastic coefficient ($C_B$) of the transparent thermoplastic resin (B) is preferably smaller and is preferably $10.0 \times 10^{-12}$/Pa or less, more preferably $8.0 \times 10^{-12}$/Pa or less, still more preferably $6.0 \times 10^{-12}$/Pa or less, particularly preferably $5.0 \times 10^{-12}$/Pa or less, and most preferably $4.0 \times 10^{-12}$/Pa or less. If the absolute value of photoelastic coefficient ($C_B$) is equal to or less than the upper limit, stress birefringence due to residual stress that occurs during the forming process such as extrusion is sufficiently small (see Fig. 6), and thus the standard deviation of the Re value of the resin plate can be reduced. As a result, rainbow unevenness due to variation in the Re value may be suppressed when the liquid crystal display protective plate on a liquid crystal screen is observed through a polarizing filter, and hence the visibility improves.

The absolute value of the orientation birefringence ($\Delta n_B$) of the transparent thermoplastic resin (B) is preferably smaller and is preferably less than $10.0 \times 10^{-4}$, more preferably $8.0 \times 10^{-4}$ or less, still more preferably $6.0 \times 10^{-4}$ or less,

particularly preferably 4.0 × 10⁻⁴ or less, and most preferably 2.0 × 10⁻⁴ or less. If the absolute value of orientation birefringence ($\Delta n_B$) of the transparent thermoplastic resin (B) is equal to or less than the upper limit, the effect on the Re value of the resin plate is sufficiently small (see Fig. 6), and thus the Re value of the resin plate can be well controlled within an appropriate range.

The transparent thermoplastic resin (B) is not particularly limited as long as it is a transparent thermoplastic resin that satisfies ranges of the photoelastic coefficient ($C_B$) and the orientation birefringence ($\Delta n_B$) specified in the present invention. Specific examples thereof include a common non-modified methacrylic resin (PM), a modified methacrylic resin that is modified with glutarimide units, N-substituted or unsubstituted maleimide units, lactone ring units, or the like, and a cycloolefin polymer (COP). The transparent thermoplastic resin (B) can be used alone or in combination of two or more.

The methacrylic resin (PM) is a homopolymer or a copolymer containing structural units derived from one or more methacrylic acid esters. From the viewpoint of transparency, the content of the methacrylic acid ester monomer units in the methacrylic resin (PM) is preferably 50 mass% or more, more preferably 80 mass% or more, and particularly preferably 90 mass% or more, and may also be 100 mass%.

Preferred examples of the methacrylic acid esters include methyl methacrylate (MMA), ethyl methacrylate, butyl methacrylate, phenyl methacrylate, benzyl methacrylate, 2-ethylhexyl methacrylate, 2-hydroxyethyl methacrylate; methacrylic esters of a monocyclic aliphatic hydrocarbon; and methacrylic esters of a polycyclic aliphatic hydrocarbon. From the viewpoint of transparency, the methacrylic resin (PM) preferably contains the MMA units, and the content of the MMA units in the methacrylic resin (PM) is preferably 50 mass% or more, more preferably 80 mass% or more, and particularly preferably 90 mass% or more, and may also be 100 mass%.

The methacrylic resin (PM) may contain structural units derived from one or more monomers other than the methacrylic acid esters. Examples of other monomers include acrylic acid esters such as methyl acrylate (MA), ethyl acrylate, butyl acrylate, cyclohexyl acrylate, phenyl acrylate, benzyl acrylate, 2-ethylhexyl acrylate, and 2-hydroxyethyl acrylate; styrenes; acrylonitriles and methacrylonitriles; and maleic anhydride, phenylmaleimide, and cyclohexylmaleimide. Among them, the MA is preferred from the viewpoint of transparency. For example, a copolymer of MMA and MA has excellent transparency and thus is preferred. The content of the MMA in this copolymers is preferably 80 mass% or more, more preferably 85 mass% or more, and particularly preferably 90 mass% or more, and may also be 100 mass%.

The methacrylic resin (PM) is preferably obtained by polymerizing one or more methacrylic acid esters including MMA and, if necessary, other monomers. In the case of using a plurality of monomers, polymerization is usually carried out after mixing the plurality of monomers to prepare a monomer mixture. The polymerization method is not particularly limited and is preferably a radical polymerization method such as a bulk polymerization method, a suspension polymerization method, a solution polymerization method, and an emulsion polymerization method from the viewpoint of productivity.

The substrate layer can contain a methacrylic resin (PM-H) with a relatively high triad syndiotacticity (rr) (which can be hereinafter referred to simply as "syndiotacticity (rr)" or abbreviated as "rr percentage"). In general, the methacrylic resin (PM) tends to have a higher glass transition temperature (Tg) and better heat resistance as the rr percentage increases.

From the viewpoint of improving heat resistance ($Tg_B$ improvement), the rr percentage of the methacrylic resin (PM-H) is preferably 58% or more, more preferably 59% or more, still more preferably 60% or more, and particularly preferably 62% or more, and most preferably 65% or more.

The upper limit of the rr percentage is not particularly limited and is preferably 99%, more preferably 85%, still more preferably 77%, particularly preferably 76%, and most preferably 75%, from the viewpoint of mechanical properties such as toughness, tear resistance, and impact resistance, and film-forming properties.

In the present description, the triad syndiotacticity (rr) is a proportion at which two chains (diad) in the chains of three consecutive structural units (triad) are both racemos.

Note that in the chains of structural units (diad) in polymer molecules, those having the same configuration are called meso, and those having the opposite configuration are called racemo, which are referred to as m and r, respectively.

The triad syndiotacticity (rr) (%) of the methacrylic resin can be calculated according to the formula: $(X/Y) \times 100$ by determining a ¹H-NMR spectrum in deuterated chloroform at 30°C and measuring, from the spectrum, an area (X) of the region of 0.6 to 0.95 ppm and an area (Y) of the region of 0.6 to 1.35 ppm when TMS is taken as 0 ppm.

The methacrylic resin (PM-H) can include a plurality of methacrylic resins with different rr percentages. For example, the methacrylic resin (PM-H) can include a first methacrylic resin (H1) with a rr percentage of 65% or more and a second methacrylic resin (H2) with a rr percentage of 45 to 58%. In this case, the content of the first methacrylic resin (H1) is preferably 40 to 70 parts by mass and the content of the second methacrylic resin (H2) is preferably 60 to 30 parts by mass with respect to 100 parts by mass of the total of the first methacrylic resin (H1) and the second methacrylic resin (H2). The first methacrylic resin (H1) and the second methacrylic resin (H2) can each be used alone or in combination of two or more.

As described above, a methacrylic resin (PM-H) with a rr percentage of 58% or more and suitable for various properties can be stably obtained by using the first methacrylic resin (H1) with a rr percentage of 65% or more and the second methacrylic resin (H2) with a rr percentage of 45 to 58%.

Although heat resistance can be further improved by using the first methacrylic resin (H1) with a rr percentage of 65% or more, this resin alone tends to reduce mechanical properties such as toughness, tear resistance, and impact resistance, as well as film-forming properties and handling properties. The use of the first methacrylic resin (H1) with a rr percentage of 65% or more in combination with the second methacrylic resin (H2) with a rr percentage of 58% or less can improve mechanical properties such as toughness, tear resistance, and impact resistance, as well as film-forming properties and handling properties while improving heat resistance.

The types of resins illustrated as the transparent thermoplastic resin (A) (specifically, MS resin, SMA resin, SMM resin, AS resin, and modified methacrylic resin, etc.) may be used as the transparent thermoplastic resin (B), as long as they satisfy the ranges of photoelastic coefficient ($C_B$) and orientation birefringence ($\Delta n_B$) specified in the present invention. The types of resins illustrated as the transparent thermoplastic resin (A) may be used as the transparent thermoplastic resin (B) depending on their monomer compositions or modification ratios.

The polycarbonate resins are not included in the transparent thermoplastic resin (B) because the photoelastic coefficient and orientation birefringence are outside the specified ranges of the present invention.

The polycarbonate resin has a very large absolute value of the photoelastic coefficient of $90 \times 10^{-12}$/Pa, and thus the Re value changes with slight stress. Therefore, in the case of using polycarbonate resin, it is difficult to obtain an optically uniform liquid crystal display protective plate. For example, when the liquid crystal display protective plate on a liquid crystal screen is observed through a polarizing filter, rainbow unevenness may be observed due to variation in the Re value.

As described above, $Tg_A < Tg_B$, in which $Tg_A$ (°C) represents a glass transition temperature of the phase difference adjusting layer, and $Tg_B$ (°C) represents a glass transition temperature of the substrate layer. Such a configuration can improve the heat resistance of the surface of the resin plate.

A larger difference between $Tg_A$ and $Tg_B$ is preferred. $Tg_A + 5 \leq Tg_B$ is preferred, $Tg_A + 10 \leq Tg_B$ is more preferred, and $Tg_A + 15 \leq Tg_B$ is particularly preferred.

The glass transition temperature of the substrate layer ($Tg_B$) is not particularly limited as long as it satisfies $Tg_A < Tg_B$. The upper limit of the $Tg_B$ is preferably 155°C, more preferably 145°C, particularly preferably 135°C, and most preferably 130°C. The lower limit of the $Tg_B$ is preferably 115°C, more preferably 120°C, and particularly preferably 125°C.

Note that the "glass transition temperature of the substrate layer ($Tg_B$)" is a glass transition temperature of all constituent materials of the substrate layer, which is composed of one or more transparent thermoplastic resin (B) and, if necessary, one or more optional components.

The liquid crystal display protective plate can be exposed to high temperatures during the production process.

A cured coating film with low reflectivity can be formed on at least one side of the resin plate to improve scratch resistance (hard coat property) and/or visibility. In the process of forming the cured coating film, the resin plate can be exposed to high temperatures. For example, a thermosetting coating film material requires heating for curing, and a light-curing coating film material is subjected to heat during light irradiation. In the case where the coating film material contains a solvent, it may be heated to dry the solvent. In particular, in the case of using the thermosetting coating film material, a resin plate can be exposed to higher temperatures than in the case of using other coating film materials.

In the case where the heat resistance of the surface of the resin plate is insufficient, warpage and surface roughness of the resin plate may occur due to the heat received during the curing of the thermosetting coating film material.

If the curing temperature of the thermosetting film material is lowered, the curing time increases, and hence the productivity decreases. Furthermore, its crosslinking reaction does not proceed well, resulting in poor adhesion between the surface resin of the resin plate and the cured coating film, and the cured coating film may peel off from the resin plate under a wet-heat environment or in a wet-heat test.

In a resin plate included in the liquid crystal display protective plate of the present invention, a substrate layer is laminated on both sides of a phase difference adjusting layer. $Tg_A < Tg_B$, in which $Tg_A$ represents a glass transition temperature of the phase difference adjusting layer, and $Tg_B$ represents a glass transition temperature of the substrate layer. The heat resistance of both sides of the resin plate can be improved by laminating a substrate layer with relatively high Tg on both sides of the phase difference adjusting layer. Therefore, warpage, surface roughness, and the like of the resin plate can be suppressed without lowering the curing temperature, even in the case of forming a cured coating film by using a thermosetting coating film material. Since curing can be performed at a suitable temperature without the need to lower the curing temperature, the cured coating film can be formed with high productivity, and adhesion between the surface resin of the resin plate and the cured coating film can be good.

In the resin plate included in the liquid crystal display protective plate of the present invention, warpage does not occur easily not only during the formation of the cured coating film but also under a wet-heat environment or in a wet-heat test.

In the case where the substrate layer contains a methacrylic resin (PM), an effect of improving the surface hardness of the resin plate can be obtained in addition to the above effects, which is preferred.

$T_B$ represents the total thickness of the substrate layer laminated on both sides of the phase difference adjusting layer. The total thickness of the substrate layer ($T_B$) is not particularly limited and is appropriately designed according to the desired thickness and rigidity of the liquid crystal display protective plate. The $T_B$ is preferably 0.05 to 4.5 mm, more preferably 0.5 to 4.0 mm, particularly preferably 1.0 to 3.5 mm, and most preferably 1.0 to 3.0 mm.

The relationship between the thickness of the phase difference adjusting layer ($T_A$) and the total thickness of the substrate layer ($T_B$) is not particularly limited and is preferably $T_A < T_B$, in other words, $T_B/T_A > 1$. $T_B/T_A \geq 1.2$ is more preferred, $T_B/T_A \geq 1.5$ is particularly preferred, and $T_B/T_A \geq 2.0$ is most preferred.

If the $T_A$ and the $T_B$ are in the above relationship, the proportion of the total thickness of the substrate layer ($T_B$) to the overall thickness (d) of the resin plate is sufficiently large, the effect of improving the heat resistance of both sides of the resin plate is more effectively obtained, warpage and surface roughness of the resin plate during the formation of the cured coating film, and warpage under a wet-heat environment or in a wet-heat test can be more effectively suppressed.

The substrate layer can contain one or more other polymers whose photoelastic coefficient and/or orientation birefringence are not specified as the transparent thermoplastic resin (B), if in small amounts. The types of such other polymers are not particularly limited. Examples thereof include other thermoplastic resins such as polycarbonate resins, polyolefins, e.g., polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins.

The content of the transparent thermoplastic resin (B) in the substrate layer is preferably larger and is preferably 90 mass% or more, more preferably 95 mass% or more, and particularly preferably 98 mass% or more. The content of the other polymers in the substrate layer is preferably 10 mass% or less, more preferably 5 mass% or less, and particularly preferably 2 mass% or less.

The substrate layer can contain various additives, if necessary. An example of an additive type illustrated and preferred amounts to be added are the same as an additive available for the phase difference adjusting layer.

In the case of adding such other polymers and/or additives to the substrate layer, the timing of addition may be at the time of polymerization of the transparent thermoplastic resin (B) or after the polymerization.

The substrate layer may be a resin layer formed of a resin composition containing the transparent thermoplastic resin (B) and a known rubber component (impact resistance modifier). An example of a rubber component illustrated is the same as a rubber component available for the phase difference adjusting layer. From the viewpoint of transparency of the substrate layer, a smaller difference between refractive index of the rubber component and a reflective index of the main component, the transparent thermoplastic resin (B) is preferred.

(Other resin layers)

The resin plate included in the liquid crystal display protective plate of the present invention may have a resin layer other than the phase difference adjusting layer and the substrate layer. Examples of a laminated structure of the resin plate include a three-layer structure consisting of a substrate layer-phase difference adjusting layer -substrate layer; a four-layer structure consisting of a substrate layer-phase difference adjusting layer-substrate layer-other resin layer; and a four-layer structure consisting of a substrate layer-phase difference adjusting layer-other resin layer-substrate layer.

(Cured coating film)

The liquid crystal display protective plate of the present invention can have, if necessary, a cured coating film formed on at least one surface of a resin plate in which a substrate layer is laminated on both sides of a phase difference adjusting layer. The liquid crystal display protective plate of the present invention can have a cured coating film on at least one of the outermost surfaces.

The cured coating film can serve as a scratch-resistant layer (hard coat layer) or a low reflective layer for the effect of improving visibility. The cured coating film can be formed by a known method.

Examples of the material of the cured coating film include inorganic-based, organic-based, organic-inorganic-based, and silicone-based materials, and organic-based and organic-inorganic-based materials are preferred from the viewpoint of productivity.

The inorganic-based cured coating film can be formed by, for example, forming a film of an inorganic material such as metal oxides such as $SiO_2$, $Al_2O_3$, $TiO_2$, and $ZrO_2$ by vapor-phase film formation such as vacuum vapor deposition and sputtering.

The organic-based cured coating film can be formed by, for example, coating with a paint containing a resin such as melamine-based resin, alkyd-based resin, urethane-based resin, and acrylic resin followed by heat curing, or by coating with a paint containing a polyfunctional acrylic resin and followed by ultraviolet curing.

The organic-inorganic-based cured coating film can be formed by, for example, coating with an ultraviolet curable hard coat paint containing inorganic ultrafine particles such as silica ultrafine particles in which a photopolymerization reactive functional group has been introduced into the surface and a curable organic component, and then subjecting the curable organic component and the photopolymerization reactive functional group of the inorganic ultrafine particles to polymerization reaction through ultraviolet irradiation. In this method, a mesh-shaped crosslinked coating film in which the inorganic ultrafine particles are dispersed in an organic matrix while being chemically bonded to the organic matrix can be obtained.

The silicone-based cured coating film can be formed by, for example, subjecting a partial hydrolysis product such as carbon functional alkoxysilane, alkyltrialkoxysilane, and tetraalkoxysilane, or a material obtained by blending colloidal silica with the partial hydrolysis product to polycondensation.

In the above method, examples of the material coating method include dip coating, various roll coatings such as gravure roll coating, flow coating, rod coating, blade coating, spray coating, die coating, and bar coating.

As described above, in particular, in the case of using the thermosetting coating film material, a resin plate can be exposed to higher temperatures than in the case of using other coating film materials. The resin plate included in the liquid crystal display protective plate of the present invention has a structure in which a substrate layer having a relatively high glass transition temperature (Tg) is laminated on both sides of a phase difference adjusting layer, and thus has excellent heat resistance on both sides. Therefore, the present invention is particularly useful in the case of forming a cured coating film by using a thermosetting coating film material.

The thickness of the scratch-resistant (hard coating) cured coating film (scratch-resistant layer and hard coat layer) is preferably 2 to 30 $\mu$m and more preferably 5 to 20 $\mu$m. Excessively small thickness may result in insufficient surface hardness, whereas excessively large thickness may result in cracks caused by bending during the production process. The thickness of the low-reflective cured coating film (low reflective layer) is preferably 80 to 200 nm and more preferably 100 to 150 nm. Either excessively small or large thickness may result in insufficient low-reflection performance.

In addition to that, the liquid crystal display protective plate of the present invention can have, if necessary, a known surface treatment layer such as an anti-glare layer, an anti-reflection layer, and an anti-finger print layer, on the surface.

[Method for producing liquid crystal display protective plate]

The method for producing the liquid crystal display protective plate of the present invention has a step (X) of preparing a resin plate in which a substrate layer having a relatively high glass transition temperature (Tg) is laminated on both sides of a phase difference adjusting layer.

The method for producing the liquid crystal display protective plate of the present invention further has a step (Y) of forming a cured coating film on at least one surface of the resulting resin plate, if necessary.

(Step (X))

A resin plate with the above laminated structure can be formed using known methods such as cast molding, injection molding, and extrusion. Among them, co-extrusion is preferred.

Hereinafter, the method for producing the resin plate by co-extrusion will be explained.

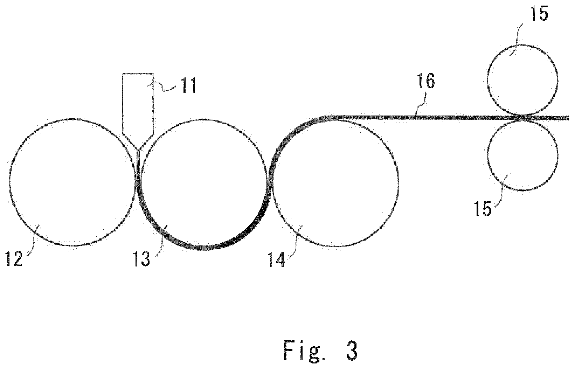

Fig. 3 shows a schematic view of an extrusion apparatus including a T die 11, first to third cooling rolls 12 to 14, and a pair of winding rolls 15, as one embodiment.

Constituent resins in each layer are each melted and kneaded using an extruder and co-extruded in the form of plates from the T die 11 with a wide discharge port in the form of the desired laminated structure.

Examples of the lamination method include the feed block method in which lamination is carried out before flowing into the T die and the multi-manifold method in which lamination is carried out inside the T die. From the viewpoint of enhancing the smoothness at the interface between the layers, the multi-manifold method is preferred.

The resin plate in a molten laminate structure co-extruded from the T die 11 is pressurized and cooled using a plurality of cooling rolls 12 to 14. The pressurized and cooled resin plate 16 is wound by a pair of winding rolls 15. The number of cooling rolls can be appropriately designed.

In the present invention, the resin plate is formed so that the resin plate has a Re value of 50 to 330 nm.

To control the Re value, it is necessary to control orientation of molecules. The orientation of molecules is caused, for example, by stress during forming in the vicinity of the glass transition temperature of the polymer. The orientation of molecules can be controlled by optimizing the production condition during the extrusion process, whereby the Re value of the resin plate after extrusion can be optimized.

(Step (Y))

In step (Y), an inorganic or organic cured coating film is formed on at least one surface of the resin plate obtained in step (X) by a known method. The method for forming the cured coating film has been described above and thus is omitted here.

(Other steps)

The method for producing the liquid crystal display protective plate of the present invention can have steps other than steps (X) and (Y) above, if necessary.

For the purpose of improving the adhesion of the cured coating film to the resin plate, for example, steps of applying surface treatments to the side on which the cured coating film of the resin plate obtained in step (X) is formed may be added between step (X) and step (Y), in which the surface treatments include treatments to make the surface concave and convex such as primer treatment, sandblasting treatment, and solvent treatment; and surface oxidation treatments such as corona discharge treatment, chromic acid treatment, ozone irradiation treatment, and ultraviolet irradiation treatment.

As explained above, the present invention can provide a liquid crystal display protective plate capable of suppressing deterioration of visibility such as rainbow unevenness, blackout, and coloring when the liquid crystal display protective plate on a liquid crystal screen is observed through a polarizing filter.

The present invention can provide a liquid crystal display protective plate in which the occurrence of warpage under a wet-heat environment or in a wet-heat test is suppressed.

The liquid crystal display protective plate of the present invention can include a resin plate and, if necessary, a cured coating film. The present invention can provide a liquid crystal display protective plate including a resin plate and a cured coating film; being capable of suppressing warpage, surface roughness, and the like of the resin plate without lowering the curing temperature, even in the case of forming the cured coating film by using a thermosetting coating film material; and having good adhesion between the resin plate and the cured coating film.

[Applications]

The liquid crystal display protective plate of the present invention is suitable as a protective plate for liquid crystal displays and touch panels used in, for example, ATMs of financial institutions such as banks; vending machines; televisions; and digital information devices such as mobile phones (including smartphones), personal computers, personal digital assistants (PDA) such as tablet-type personal computers, digital audio players, portable game machines, copiers, fax machines, and car navigation systems.

The liquid crystal display protective plate of the present invention is suitable, for example, as a protective plate for in-vehicle liquid crystal displays.

Examples

Examples according to the present invention and Comparative Examples will be described.

[Evaluation items and evaluation methods]

The evaluation items and the evaluation methods are as follows.

(Content of aromatic vinyl monomer units in transparent thermoplastic resin (A))

The content of aromatic vinyl monomer units (V mass%) in the MS resin was determined by a $^1$H-NMR method using a nuclear magnetic resonance apparatus ("GX-270" manufactured by JEOL Ltd.).

(Glass transition temperature (Tg) of transparent thermoplastic resin)

The glass transition temperature (Tg) of the transparent thermoplastic resin was measured by using a differential scanning calorimeter ("DSC-50" manufactured by Rigaku Corporation). 10 mg of the transparent thermoplastic resin was put into an aluminum pan and set in the above apparatus. After nitrogen substitution was carried out for 30 minutes or more, the temperature was temporarily raised from 25°C to 200°C at a rate of 20°C/min, retained for 10 minutes, and then cooled to 25°C under a 10 ml/min nitrogen flow (primary scanning). Then, the temperature was raised to 200°C at a rate of 10°C/min (secondary scanning), and the glass transition temperature (Tg) was calculated from the results obtained in the secondary scanning by a middle point method. When a plurality of Tg data were obtained in the resin composition containing two or more resins, the value derived from the resin as the main component was adopted as the Tg data.

(Photoelastic coefficient of transparent thermoplastic resin)

The transparent thermoplastic resin was press-molded to obtain a resin plate with a thickness of 1.0 mm. A test specimen with a width of 15 mm and a length of 80 mm was cut out from the center of the obtained resin plate. Both ends of this test specimen in the longitudinal direction were gripped with a pair of chucks. The distance between the chucks was 70 mm.

"X-axis dovetail stage" manufactured by Oji Scientific Instruments Co., Ltd. was used to apply tension to the test specimen. The tension was increased in steps of 10 N from 0 N to 30 N. The tension was monitored by "Separated Sensor Model Digital Force Gauge ZTS-DPU-100N" manufactured by IMADA Co., Ltd.

The following measurements were performed for each step of tension-applied conditions from 0 N to 100 N.

The phase difference value [nm] of the central portion of the test specimen in a state of tension applied was measured by using "KOBRA-WR" manufactured by Oji Scientific Instruments Co., Ltd. under the condition of a measurement wavelength of 589.5 nm. Thereafter, the test specimen was removed from a pair of the chucks to measure the thickness (d [mm]) of a phase difference measurement portion. The cross-sectional area of the test specimen (S) [m$^2$] (= 15 [mm] $\times$ d [mm] $\times$ 10$^{-6}$), stress [Pa] (= tension [N]/S [m$^2$]), and birefringence (= phase difference value [nm] $\times$ 10$^{-6}$/d [mm]) were each calculated. The stress was plotted on the horizontal axis and birefringence on the vertical axis, and the slope of the line obtained by a method of least squares was determined as the photoelastic coefficient.

(Orientation birefringence of transparent thermoplastic resin)

The transparent thermoplastic resin was press-molded to obtain a resin plate with a thickness of 1.0 mm. A test specimen with a width of 20 mm and a length of 50 mm was cut out from the center of the obtained resin plate and set in an autograph with a heating chamber (manufactured by SHIMADZU CORPORATION). The distance between the chucks was 20 mm. After the test specimen was held at a temperature 10°C higher than the glass transition temperature (Tg) for 3 minutes, it was uniaxially stretched at a rate of 3 mm/min. The stretching ratio was 100%. The distance between the chucks after stretching was 40 mm under these conditions. After the stretched test specimen was detached from the above apparatus and cooled to 23°C, the thickness (d) was measured, and then the Re value of the central portion was measured by using "KOBRA-WR" manufactured by Oji Scientific Instruments Co. Ltd. under the condition of a measurement wavelength of 589.5 nm. The resulting Re value was divided by the thickness (d) of the test specimen to calculate a value of orientation birefringence.

(Average and standard deviation of Re value of liquid crystal display protective plates (resin plates before formation of cured coating film))

A test specimen with a width of 21 cm and a length of 30 cm was cut out from the center of the liquid crystal display protective plate (resin plate before the formation of cured coating film) so that the extrusion direction (resin flow direction) was in the longitudinal direction. A standard lens (FUJINON HF12.5HA-1B) was attached to the "WPA-100-L" manufactured by Photonic Lattice, Inc. The height of the lens was adjusted so that the measurement range was 17 cm in width and 22 cm in length. Thereafter, Re values of about 110,000 birefringent pixels were measured to determine the average and standard deviation.

(Thickness of each layer)

The thickness of each layer was measured by using a "Profile Projector V-12B" manufactured by Nikon Corporation.

(Rainbow unevenness)

The liquid crystal display protective plate (resin plate before the formation of cured coating film) was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where rainbow unevenness due to the variation in Re value became the strongest was visually evaluated at the following three levels.

A (Good): No rainbow unevenness at all and no deterioration of visibility of the liquid crystal display.
B (Acceptable): Slight rainbow unevenness, resulting in slight deterioration of visibility of the liquid crystal display.
C (Poor): Significant rainbow unevenness, resulting in significant deterioration of visibility of the liquid crystal display.

(Blackout)

The liquid crystal display protective plate (resin plate before the formation of cured coating film) was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where the transmitted light intensity of the liquid crystal display became the lowest was visually evaluated at the following three levels.

A (Good): The transmitted light intensity is sufficiently high to allow clear visibility of characters or the like displayed on the liquid crystal display.
B (Acceptable): The light transmittance is slightly low, and the visibility of characters or the like displayed on the liquid crystal display has slightly deteriorated.
C (Poor): The transmitted light intensity is almost zero, and the characters or the like displayed on the liquid crystal display are not visible.

(Coloring)

The liquid crystal display protective plate (resin plate before the formation of cured coating film) was placed on a liquid crystal display so that the transmission axis of the polarizer on the visible side of the liquid crystal display and the extrusion direction of the resin plate are perpendicular to each other. A polarizing film was further placed on top thereof, the polarizing film was rotated to various angles, and the visibility at the angle where the coloring of the liquid crystal display became the greatest was visually evaluated at the following three levels.

A (Good): No significant coloring and no deterioration of visibility of the liquid crystal display.
B (Acceptable): Coloring, resulting in slight deterioration of visibility of the liquid crystal display.
C (Poor): Significant coloring, resulting in significant deterioration of visibility of the liquid crystal display.

(Pencil hardness)

Using a table-moving pencil scratch tester (Model P) (manufactured by Toyo Seiki Seisaku-sho, Ltd.), a pencil lead was scratched against the surface of the cured coating film side of the liquid crystal display protective plate including the cured coating film under the conditions of an angle of 45° and a load of 750 g, and the presence of scratches was visually checked. The hardness of the pencil lead was sequentially increased, and the hardness of the lead one grade softer than when scratches occurred was adopted as the pencil hardness.

(Adhesion)

A 50 mm square test specimen was cut out from the liquid crystal display protective plate including the cured coating film. Ultraviolet (UV) was irradiated to the test specimen for 100 hours by using SUPER UV TESTER (manufactured by IWASAKI ELECTRIC CO., LTD.; SUV-W161) under the conditions of a black panel temperature of 83°C, a relative humidity of 50%, and an irradiation energy of 100 mW/cm$^2$. Thereafter, the test specimen was removed from the tester, and the cured coating film was cross-cut into 100 pieces of a 1 mm$^2$ grid by using a grid peeling test jig under the environment at a temperature of 23°C and a relative humidity of 50%, in accordance with JIS-K5600-5-6. A pressure-sensitive adhesive tape No. 252 manufactured by SEKISUI CHEMICAL CO., LTD. was applied on the top thereof and then pressed evenly over the entire surface using a spatula. Thereafter, the pressure-sensitive adhesive tape was peeled off in a 180° direction. The number of pieces that remained without peeling out of 100 pieces of the grids was determined, and the adhesion was evaluated based on the following criteria:

A (Good): 100 pieces,
B (Acceptable): 90 to 99 pieces, and
C (Poor): 89 pieces or less.

(Appearance)

The liquid crystal display protective plates including the cured coating film were visually observed from the cured coating film side, and the appearance was evaluated based on the following criteria.

A (Good): No creases in the liquid crystal display protective plate and no cracks in the cured coating film.
C (Poor): Creases in the liquid crystal display protective plate and/or cracks in the cured coating film.

[Materials]

The materials used are as follows.

<MS resin>

An MS resin (copolymer of methyl methacrylate (MMA) and styrene (St)) was polymerized according to the method for producing a copolymer (A) described in [Examples] of Japanese Unexamined Patent Application Publication No. 2003-231785. The mass ratio of MMA to St charged in an autoclave was changed to produce the following three MS resins:

(MS-1) with Tg = 116°C and a content of aromatic vinyl monomer unit V = 10 mass%,
(MS-2) with Tg = 109°C and a content of aromatic vinyl monomer unit V = 35 mass%, and
(MS-3) with Tg = 100°C and a content of aromatic vinyl monomer unit V = 90 mass%.

<Methacrylic resin>

(PMMA-1) A copolymer of 99.3 mass% of methyl methacrylate (MMA) and 0.7 mass% of methyl acrylate, manufactured by Kuraray Co., Ltd., with Tg = 119°C, a content of aromatic vinyl monomer unit V = 0 mass%, and syndiotacticity (rr) = 52%.
(PMMA-2) A homopolymer of methyl methacrylate (MMA) with Tg = 130°C, a content of aromatic vinyl monomer unit V = 0 mass%, and syndiotacticity (rr) = 75%.

<Polycarbonate resin>

(PC-1) "SD POLYCA 300 Series" manufactured by Sumika Polycarbonate Limited, with Tg = 150°C and a content of aromatic vinyl monomer unit V = 0 mass%.

[Examples 1 to 8]

(Production of first liquid crystal display protective plate)

The resin for the substrate layer (transparent thermoplastic resin (B)) was melted and extruded using a 50 mmφ single screw extruder (manufactured by TOSHIBA MACHINE CO., LTD.). The resin for the phase difference adjusting layer (transparent thermoplastic resin (A)) was melted and extruded using a 30 mmφ single screw extruder (manufactured by TOSHIBA MACHINE CO., LTD.). These molten resins were laminated through a multi-manifold type die, and a thermoplastic resin having a three-layer structure in which the substrate layer was laminated on both sides of the phase difference adjusting layer was co-extruded from the T die. The molten three-layered resin was discharged from the T die, sandwiched between the first cooling roll and the second cooling roll adjacent to each other, wound around the second cooling roll, sandwiched between the second cooling roll and the third cooling roll, and wound around the third cooling roll for cooling. After cooling, the resulting resin plate was wound up by a pair of winding rolls. In this manner, the first liquid crystal display protective plate (without cured coating film, reference drawing: Fig. 1) formed of the resin plate having a three-layer structure in which the substrate layer is laminated on both sides of the phase difference adjusting layer was obtained.

(Production of second liquid crystal display protective plate)

A test specimen with a length of 300 mm and a width of 210 mm was cut out from the first liquid crystal display protective plate. The resin flow direction during the extrusion was the length direction of the test specimen. After the surface of one of the substrate layers on the test specimen was coated with a silicone-based curable resin composition (SilFORT PHC 587; manufactured by Momentive Performance Materials Inc.) by using a sheet bar coater and dried at room temperature for 20 minutes, it was thermally cured under the conditions of the curing temperature and curing time listed in Table 2. In this manner, the second liquid crystal display protective plate including the cured coating film was obtained.
Table 1 and Table 2 show the type and properties of the resins used, the thickness of the phase difference adjusting layer, the total thickness of the substrate layer, $V \times T_A$, and evaluation results for the first and second liquid crystal display protective plates in each example.

[Comparative Examples 1-1 to 1-3, 3, and 4]

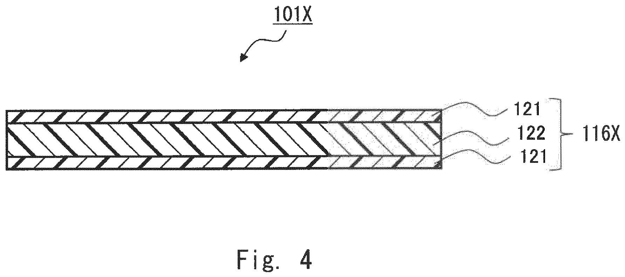

The first liquid crystal display protective plate (without cured coating film, reference drawing: Fig. 4) formed of the resin plate having a three-layer structure was obtained in the same manner as in Examples 1 to 8, except that co-extrusion was performed so that the phase difference adjusting layer was laminated on both sides of the substrate layer. In Fig. 4, reference numeral 101X denotes a liquid crystal display protective plate for comparison, reference numeral 116X denotes a resin plate for comparison, reference numeral 121 denotes a phase difference adjusting layer, and reference numeral 122 denotes a substrate layer.

The second liquid crystal display protective plate including the cured coating film was obtained by using the obtained first liquid crystal display protective plate in the same method as in Examples 1 to 8. In these examples, the cured coating films were formed on one side of the phase difference adjusting layer.

Note that Comparative Examples 1-1 to 1-3 are examples in which production conditions for extruded plates are the same, and forming conditions for the cured coating film are changed.

Table 1 and Table 2 show the type and properties of the resins used, the thickness of the phase difference adjusting layer, the total thickness of the substrate layer, $V \times T_A$, and forming conditions of the cured coating film, evaluation results for the first and second liquid crystal display protective plates in each example.

[Comparative Example 2]

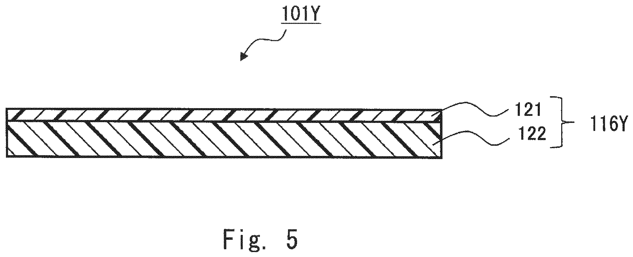

The first liquid crystal display protective plate (without cured coating film, reference drawing: Fig. 5) formed of the resin plate having a two-layer structure was obtained in the same manner as in Examples 1 to 8, except that co-extrusion was performed so that the phase difference adjusting layer was laminated on one side of the substrate layer. In Fig. 5, reference numeral 101Y denotes a liquid crystal display protective plate for comparison, reference numeral 116Y denotes a resin plate for comparison, reference numeral 121 denotes a phase difference adjusting layer, and reference numeral 122 denotes a substrate layer.

The second liquid crystal display protective plate including the cured coating film was obtained by using the obtained first liquid crystal display protective plate in the same method as in Examples 1 to 8. In these examples, the cured coating film was formed on the phase difference adjusting layer.

Table 1 and Table 2 show the type and properties of the resins used, the thickness of the phase difference adjusting layer, the total thickness of the substrate layer, $V \times T_A$, and forming conditions of the cured coating film, evaluation results for the first and second liquid crystal display protective plates in each example.

[Table 1]

| | Laminated structure | Phase difference adjusting layer | | | | $Tg_A$ [°C] | Thickness $T_A$ [mm] | $V \times T_A$ | Substrate layer | | | $TgB$ [°C] | Total thickness $T_B$ [mm] |
| | | Transparent thermoplastic resin (A) or resin for comparison | | | | | | | Transparent thermoplastic resin (B) or resin for comparison | | | | |
| | | Type | Content of aromatic vinyl unit V [mass%] | Photoelastic coefficient $C_A$ [$\times 10^{12}$/Pa] | Orientation birefringence $\Delta n_A$ [$\times 10^{-4}$] | | | | Type | Photoelastic coefficient $C_B$ [$\times 10^{-12}$/Pa] | Orientation birefringence $\Delta n_B$ [$\times 10^{-4}$] | | |
| Example 1 | Fig. 1 | MS-2 | 35 | 1.1 | -37.6 | 109 | 0.30 | 10.5 | PMMA-1 | -3.2 | -4.0 | 119 | 2.70 |
| Example 2 | Fig. 1 | MS-2 | 35 | 1.1 | -37.6 | 109 | 0.30 | 10.5 | PMMA-1 | -3.2 | -4.0 | 119 | 0.70 |
| Example 3 | Fig. 1 | MS-1 | 10 | -2.0 | -13.6 | 116 | 1.00 | 10.0 | PMMA-1 | -3.2 | -4.0 | 119 | 2.00 |
| Example 4 | Fig. 1 | MS-3 | 90 | 7.8 | -90.4 | 100 | 0.20 | 18.0 | PMMA-1 | -3.2 | -4.0 | 119 | 2.80 |
| Example 5 | Fig. 1 | MS-3 | 90 | 7.8 | -90.4 | 100 | 0.20 | 18.0 | PMMA-1 | -3.2 | -4.0 | 119 | 0.30 |
| Example 6 | Fig. 1 | MS-2 | 35 | 1.1 | -37.6 | 109 | 0.30 | 10.5 | PMMA-2 | -3.2 | -4.0 | 130 | 2.70 |
| Example 7 | Fig. 1 | MS-1 | 10 | -2.0 | -13.6 | 116 | 0.40 | 4.0 | PMMA-1 | -3.2 | -4.0 | 119 | 2.60 |
| Example 8 | Fig. 1 | MS-3 | 90 | 7.8 | -90.4 | 100 | 0.35 | 31.5 | PMMA-1 | -3.2 | -4.0 | 119 | 2.65 |
| Comparative Example 1-1 | Fig. 4 | MS-2 | 35 | 1.1 | -37.6 | 109 | 0.30 | 10.5 | PMMA-1 | -3.2 | -4.0 | 119 | 2.70 |
| Comparative Example 1-2 | Fig. 4 | MS-2 | 35 | 1.1 | -37.6 | 109 | 0.30 | 10.5 | PMMA-1 | -3.2 | -4.0 | 119 | 2.70 |
| Comparative Example 1-3 | Fig. 4 | MS-2 | 35 | 1.1 | -37.6 | 109 | 0.30 | 10.5 | PMMA-1 | -3.2 | -4.0 | 119 | 2.70 |
| Comparative Example 2 | Fig. 5 | MS-2 | 35 | 1.1 | -37.6 | 109 | 0.30 | 10.5 | PMMA-1 | -3.2 | -4.0 | 119 | 2.70 |
| Comparative Example 3 | Fig. 4 | MS-2 | 35 | 1.1 | -37.6 | 109 | 0.30 | 10.5 | PC-1 | 90.0 | 164.0 | 150 | 2.70 |
| Comparative Example 4 | Fig. 4 | PMMA-1 | 0 | -3.2 | -4.0 | 119 | 0.30 | 0.0 | PC-1 | 90.0 | 164.0 | 150 | 2.70 |

EP 4 075 187 B1

18

[Table 2]

| | First liquid crystal display protective plate (without cured coating film) | | | | | | Second liquid crystal display protective plate (with cured coating film) | | | | |
| | Overall thickness d [mm] | Re value | | Visibility of liquid crystal display | | | Forming conditions of cured coating film | | Evaluation results | | |
| | | Average [nm] | Standard deviation [nm] | Rainbow unevenness | Blackout | Coloring | Curing temperature | Curing time | Pencil hardness | Adhesion | Appearance |
|---|---|---|---|---|---|---|---|---|---|---|---|
| Example 1 | 3.00 | 105 | 2.6 | A | A | A | 115°C | 10min | 5H | A | A |
| Example 2 | 1.00 | 120 | 2.9 | A | A | A | 115°C | 10min | 5H | A | A |
| Example 3 | 3.00 | 110 | 2.7 | A | A | A | 115°C | 10min | 5H | A | A |
| Example 4 | 3.00 | 169 | 5.1 | A | A | A | 115°C | 10min | 5H | A | A |
| Example 5 | 0.50 | 141 | 5.0 | A | A | A | 115°C | 10min | 5H | A | A |
| Example 6 | 3.00 | 105 | 2.7 | A | A | A | 115°C | 10min | 5H | A | A |
| Example 7 | 3.00 | 61 | 1.9 | A | B | A | 115°C | 10min | 5H | A | A |
| Example 8 | 3.00 | 300 | 10.1 | B | A | B | 115°C | 10min | 5H | A | A |
| Comparative Example 1-1 | 3.00 | 105 | 2.6 | A | A | A | 115°C | 10min | 5H | A | C |
| Comparative Example 1-2 | 3.00 | 105 | 2.6 | A | A | A | 90°C | 10min | 4H | C | A |
| Comparative Example 1-3 | 3.00 | 105 | 2.6 | A | A | A | 90°C | 30min | 5H | B | A |
| Comparative Example 2 | 3.00 | 105 | 2.6 | A | A | A | 115°C | 10min | 5H | A | C |
| Comparative Example 3 | 3.00 | 250 | 26.8 | C | A | A | 115°C | 10min | 5H | A | C |
| Comparative Example 4 | 3.00 | 197 | 25.8 | C | A | A | 115°C | 10min | 5H | A | A |

[Summary of results]

In Examples 1 to 8, a first liquid crystal display protective plate formed of a resin plate in which a substrate layer is laminated on both sides of a phase difference adjusting layer and a second liquid crystal display protective plate with a cured coating film formed on one of the substrate layers of this first liquid crystal display protective plate were produced. The phase difference adjusting layer was a layer including a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$. The substrate layer was a layer including a transparent thermoplastic resin (B) having an absolute value of photoelastic coefficient ($C_B$) of $10.0 \times 10^{-12}$/Pa or less and an absolute value of orientation birefringence ($\Delta n_B$) of less than $10.0 \times 10^{-4}$. $Tg_A < Tg_B$, wherein $Tg_A$ represented a glass transition temperature of the phase difference adjusting layer, and $Tg_B$ represented a glass transition temperature of the substrate layer.

In all the first liquid crystal display protective plates (without cured coating film) obtained in Examples 1 to 8, an average Re value within a width of 17 cm and a length of 22 cm was 50 to 330 nm and a standard deviation of the Re value within a width of 17 cm and a length of 22 cm was 15.0 nm or less.

In Examples 1 to 8, rainbow unevenness, coloring, and blackout were effectively suppressed by using the obtained first liquid crystal display protective plates when the liquid crystal display protective plates on liquid crystal screens were observed through a polarizing filter. In particular, results were better in Examples 1 to 6, in which $V \times T_A$ values were 6.0 to 30.0, than in Examples 7 and 8, in which $V \times T_A$ values were outside the range of 6.0 to 30.0.

All the second liquid crystal display protective plates (with cured coating film) obtained in Examples 1 to 8 had good surface hardness, adhesion between the resin plate and the cured coating film, and appearance.

In Comparative Examples 1-1 to 1-3 and 2 to 4, a first liquid crystal display protective plate formed of a resin plate in which a phase difference adjusting layer is laminated on both sides or one side of a substrate layer and a second liquid crystal display protective plate with a cured coating film formed on the phase difference adjusting layer of this first liquid crystal display protective plates were produced.

In Comparative Example 1-1, the cured coating film was formed under the same curing conditions as in Examples 1 to 8. In this example, the curing temperature was higher than the Tg of the phase difference adjusting layer, and coating film materials cured while the phase difference adjusting layer was undergoing thermal expansion, thus resulting in cracks in the cured coating film.

In Comparative Example 1-2, the curing temperature was lowered to a temperature phase below the Tg of the phase difference adjusting layer. Although no cracks in the cured coating film occurred, the crosslinking reaction of the coating film material did not sufficiently proceed, resulting in a decrease in the surface hardness of the cured coating film and poor adhesion between the resin plate and the cured coating.

In Comparative Example 1-3, the curing temperature was lowered to a temperature below the Tg of the phase difference adjusting layer, and the curing time increased. Defective points of Comparative Examples 1-1 and 1-2, could be improved, but the curing time was time-consuming, and hence the productivity was poor.

In Comparative Example 2, as in Comparative Example 1-1, the curing temperature was higher than the Tg of the phase difference adjusting layer, and coating film materials cured while the phase difference adjusting layer was undergoing thermal expansion, thus resulting in cracks in the cured coating film.

In Comparative Examples 3 and 4, polycarbonate resins whose photoelastic coefficient ($C_B$) and orientation birefringence ($\Delta n_B$) are not specified in the present invention were used as resins for the substrate layers. In Comparative Example 4, furthermore, a methacrylic resin whose orientation birefringence ($\Delta n_A$) is not specified in the present invention was used as the resin for the phase difference adjusting layer. The liquid crystal display protective plates obtained in these Comparative Examples had a large standard deviation of the Re value (large variation in Re value), and thus rainbow unevenness occurred when the liquid crystal display protective plates on liquid crystal screens were observed through a polarizing filter. In Comparative Examples 3, as in Comparative Example 1-1, the curing temperature was higher than the Tg of the phase difference adjusting layer, and coating film materials cured while the phase difference adjusting layer was undergoing thermal expansion, thus resulting in cracks in the cured coating film.

The present invention is not limited to the above embodiments and examples and can be appropriately designed and changed within a range not deviated from the scope of the present invention.

Reference Signs List

1, 2 LIQUID CRYSTAL DISPLAY PROTECTIVE PLATE
11 T DIE
12 to 14 COOLING ROLL
15 WINDING ROLL

16 RESIN PLATE
21 PHASE DIFFERENCE ADJUSTING LAYER
22 SUBSTRATE LAYER
31 CURED COATING FILM

**Claims**

1. A liquid crystal display protective plate (1, 2) comprising:

   a resin plate (16) in which a substrate layer (22) is laminated on both sides of a phase difference adjusting layer (21), wherein
   the phase difference adjusting layer (21) comprises a transparent thermoplastic resin (A) having an absolute value of photoelastic coefficient ($C_A$) of $10.0 \times 10^{-12}$/Pa or less and an absolute value of orientation birefringence ($\Delta n_A$) of $10.0 \times 10^{-4}$ to $100.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,
   the substrate layer (22) comprises a transparent thermoplastic resin (B) having an absolute value of photoelastic coefficient ($C_B$) of $10.0 \times 10^{-12}$/Pa or less and an absolute value of orientation birefringence ($\Delta n_B$) of less than $10.0 \times 10^{-4}$, the orientation birefringence being determined by uniaxially stretching a test specimen with a width of 20 mm, a length of 40 mm, and a thickness of 1 mm at a temperature 10°C higher than a glass transition temperature thereof, a rate of 3 mm/min, and a stretching ratio of 100% and then measuring an in-plane retardation value of a central portion of the test specimen,
   $Tg_A < Tg_B$, wherein $Tg_A$ represents the glass transition temperature of the phase difference adjusting layer (21), and $Tg_B$ represents the glass transition temperature of the substrate layer (22), and
   the resin plate (16) has an in-plane retardation value of 50 to 330 nm.

2. The liquid crystal display protective plate (1, 2) according to Claim 1, wherein a standard deviation of the in-plane retardation value of the resin plate (16) within a width of 17 cm and a length of 22 cm is 15.0 nm or less.

3. The liquid crystal display protective plate (1, 2) according to Claim 1 or 2, wherein the glass transition temperature of the substrate layer (22) ($Tg_B$) is 115°C or higher.

4. The liquid crystal display protective plate (1, 2) according to any one of Claims 1 to 3, wherein

$$T_A < T_B,$$

   wherein $T_A$ represents a thickness of the phase difference adjusting layer (21), and $T_B$ represents a total thickness of the substrate layer (22).

5. The liquid crystal display protective plate (1, 2) according to any one of Claims 1 to 4, wherein

   the transparent thermoplastic resin (A) contains an aromatic vinyl monomer unit, and
   the following formula (1) is satisfied:

$$6.0 \leq V \times T_A \leq 30.0 \qquad (1)$$

   wherein V [mass%] represents a content of the aromatic vinyl monomer unit in the transparent thermoplastic resin (A), and $T_A$ [mm] represents a thickness of the phase difference adjusting layer (21).

6. The liquid crystal display protective plate (1, 2) according to any one of Claims 1 to 5, further comprising a cured coating film (31) on at least one surface of the resin plate (16).

7. The liquid crystal display protective plate (1, 2) according to any one of Claims 1 to 6, wherein the resin plate (16) is an extruded plate.

**Patentansprüche**

1. Schutzplatte für eine Flüssigkristallanzeige (1, 2), umfassend:

   eine Harzplatte (16), in der eine Substratschicht (22) auf beiden Seiten einer Phasendifferenzeinstellschicht (21) laminiert ist, wobei
   die Phasendifferenzeinstellschicht (21) ein transparentes thermoplastisches Harz (A) umfasst, das einen Absolutwert eines photoelastischen Koeffizienten ($C_A$) von $10{,}0 \times 10^{-12}$/Pa oder weniger und einen Absolutwert einer Orientierungsdoppelbrechung ($\Delta n_A$) von $10{,}0 \times 10^{-4}$ bis $100{,}0 \times 10^{-4}$ aufweist, wobei die Orientierungs-doppelbrechung durch uniaxiales Strecken eines Teststücks mit einer Breite von 20 mm, einer Länge von 40 mm und einer Dicke von 1 mm bei einer Temperatur 10°C höher als eine Glasübergangstemperatur davon mit einer Geschwindigkeit von 3 mm/min und einem Streckverhältnis von 100 % bestimmt wird, und dann ein Retardationswert in der Ebene eines zentralen Abschnitts des Teststücks gemessen wird,
   die Substratschicht (22) ein transparentes thermoplastisches Harz (B) umfasst, das einen Absolutwert eines photoelastischen Koeffizienten ($C_B$) von $10{,}0 \times 10^{-12}$/Pa oder weniger und einen Absolutwert einer Orientie-rungsdoppelbrechung ($\Delta n_B$) von weniger als $10{,}0 \times 10^{-4}$ aufweist, wobei die Orientierungsdoppelbrechung durch uniaxiales Strecken eines Teststücks mit einer Breite von 20 mm, einer Länge von 40 mm und einer Dicke von 1 mm bei einer Temperatur 10°C höher als eine Glasübergangstemperatur davon mit einer Geschwindigkeit von 3 mm/min und einem Streckverhältnis von 100 % bestimmt wird, und dann ein Retardationswert in der Ebene eines zentralen Abschnitts des Teststücks gemessen wird,
   $Tg_A < Tg_B$, wobei $Tg_A$ die Glasübergangstemperatur der Phasendifferenzeinstellschicht (21) darstellt und $Tg_B$ die Glasübergangstemperatur der Substratschicht (22) darstellt
   und die Harzplatte (16) einen Retardationswert in der Ebene von 50 bis 330 nm aufweist.

2. Schutzplatte für eine Flüssigkristallanzeige (1, 2) nach Anspruch 1, wobei eine Standardabweichung des Retardationswerts in der Ebene der Harzplatte (16) innerhalb einer Breite von 17 cm und einer Länge von 22 cm 15,0 nm oder weniger beträgt.

3. Schutzplatte für eine Flüssigkristallanzeige (1, 2) nach Anspruch 1 oder 2, wobei die Glasübergangstemperatur der Substratschicht (22) ($Tg_B$) 115°C oder höher beträgt.

4. Schutzplatte für eine Flüssigkristallanzeige (1, 2) nach einem der Ansprüche 1 bis 3, wobei

$$T_A < T_B,$$

wobei $T_A$ eine Dicke der Phasendifferenzeinstellschicht (21) darstellt, und $T_B$ eine Gesamtdicke der Substratschicht (22) darstellt.

5. Schutzplatte für eine Flüssigkristallanzeige (1, 2) nach einem der Ansprüche 1 bis 4, wobei

   das transparente thermoplastische Harz (A) eine aromatische Vinylmonomereinheit enthält, und
   die folgende Formel (1) erfüllt ist:

$$6{,}0 \leq V \times T_A \leq 30{,}0 \qquad (1)$$

   wobei V [Massen-%] einen Gehalt der aromatischen Vinylmonomereinheit in dem transparenten thermoplastischen Harz (A) darstellt, und $T_A$ [mm] eine Dicke der Phasendifferenzeinstellschicht (21) darstellt.

6. Schutzplatte für eine Flüssigkristallanzeige (1, 2) nach einem der Ansprüche 1 bis 5, weiter umfassend einen ausgehärteten Beschichtungsfilm (31) auf mindestens einer Oberfläche der Harzplatte (16).

7. Schutzplatte für eine Flüssigkristallanzeige (1, 2) nach einem der Ansprüche 1 bis 6, wobei die Harzplatte (16) eine extrudierte Platte ist.

**Revendications**

1.  Plaque protectrice d'affichage à cristaux liquides (1, 2) comprenant :

    une plaque de résine (16) dans laquelle une couche de substrat (22) est stratifiée sur les deux côtés d'une couche d'ajustement de différence de phase (21), dans laquelle
    la couche d'ajustement de différence de phase (21) comprend une résine thermoplastique transparente (A) ayant une valeur absolue de coefficient photoélastique ($C_A$) de 10,0 x 10$^{-12}$/Pa ou moins et une valeur absolue de biréfringence d'orientation ($\Delta n_A$) de 10,0 x 10$^{-4}$ à 100,0 x 10$^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
    la couche de substrat (22) comprend une résine thermoplastique transparente (B) ayant une valeur absolue de coefficient photoélastique ($C_B$) de 10,0 x 10$^{-12}$/Pa ou moins et une valeur absolue de biréfringence d'orientation ($\Delta n_B$) de moins de 10,0 x 10$^{-4}$, la biréfringence d'orientation étant déterminée en étirant de manière uniaxiale un échantillon d'essai avec une largeur de 20 mm, une longueur de 40 mm et une épaisseur de 1 mm à une température 10 °C supérieure à une température de transition vitreuse de celui-ci, un débit de 3 mm/min et un rapport d'étirement de 100 %, puis mesurant une valeur de retard dans le plan d'une portion centrale de l'échantillon d'essai,
    $Tg_A < Tg_B$, dans laquelle $Tg_A$ représente la température de transition vitreuse de la couche d'ajustement de différence de phase (21) et $Tg_B$ représente la température de transition vitreuse de la couche de substrat (22), et
    la plaque de résine (16) a une valeur de retard dans le plan de 50 à 330 nm.

2.  Plaque protectrice d'affichage à cristaux liquides (1, 2) selon la revendication 1, dans laquelle un écart type de la valeur de retard dans le plan de la plaque de résine (16) au sein d'une largeur de 17 cm et d'une longueur de 22 cm est de 15,0 nm ou moins.

3.  Plaque protectrice d'affichage à cristaux liquides (1, 2) selon la revendication 1 ou 2, dans laquelle la température de transition vitreuse de la couche de substrat ($Tg_B$) est de 115 °C ou supérieure.

4.  Plaque protectrice d'affichage à cristaux liquides (1, 2) selon l'une quelconque des revendications 1 à 3, dans laquelle

    $$T_A < T_B,$$

    dans laquelle $T_A$ représente une épaisseur de la couche d'ajustement de différence de phase (21) et $T_B$ représente une épaisseur totale de la couche de substrat (22).

5.  Plaque protectrice d'affichage à cristaux liquides (1, 2) selon l'une quelconque des revendications 1 à 4, dans laquelle

    la résine thermoplastique transparente (A) contient une unité monomère de vinyle aromatique, et
    la formule suivante (1) est satisfaite :

    $$6,0 \leq V \times T_A \leq 30,0 \qquad (1)$$

    dans laquelle V [% en masse] représente une teneur en l'unité monomère de vinyle aromatique dans la résine thermoplastique transparente (A) et $T_A$ [mm] représente une épaisseur de la couche d'ajustement de différence de phase (21).

6.  Plaque protectrice d'affichage à cristaux liquides (1, 2) selon l'une quelconque des revendications 1 à 5, comprenant en outre un film d'enrobage durci (31) sur au moins une surface de la plaque de résine (16).

7.  Plaque protectrice d'affichage à cristaux liquides (1, 2) selon l'une quelconque des revendications 1 à 6, dans laquelle la plaque de résine (16) est une plaque extrudée.

Fig. 1

Fig. 2

Fig. 3

101X

121
122 } 116X
121

Fig. 4

101Y

121
122
116Y

Fig. 5

Fig. 6

**EP 4 075 187 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004299199 A
- JP 2006103169 A
- JP 2010085978 A
- WO 2018199213 A1
- US 2016053104 A1
- JP 2003231785 A